# EUROPÄISCHE PATENTSCHRIFT

(11) **EP 1 362 744 B1**
(45) Veröffentlichungstag und Bekanntmachung des Hinweises auf die Patenterteilung: **02.12.2009**
(21) Anmeldenummer: 03011380.7
(22) Anmeldetag: 19.05.2003
(51) Int. Cl.: B60R 13/08, B21D 22/20, B29C 51/12, B29C 51/10

(54) **Bauelement aus Kunststoff, insbesondere für ein Kraftfahrzeug, und Verfahren zu seiner Herstellung**
Building element of synthetic material, in particular for an automobile, and process for manufacturing it
Elément de construction en matière synthétique, en particulier pour automobile, et son procédé de fabrication

(30) Priorität: 17.05.2002 DE 10222120
(43) Veröffentlichungstag der Anmeldung: 19.11.2003
(73) Patentinhaber: Seeber AG & Co. KG, 68165 Mannheim (DE)
(72) Erfinder: Moss, Egon, Dr., 67433 Neustadt/Weinstrasse (DE); Starke, Joachim, Dr., 81375 München (DE); Bartels, Hermann A., 63165 Mühlheim (DE)
(74) Vertreter: Trossin, Hans-Jürgen

(56) Entgegenhaltungen:
- EP-A- 0 759 352
- EP-A- 0 979 760
- DE-A- 19 529 440
- DE-A- 19 610 707
- US-A- 5 407 610

## Beschreibung

Die Erfindung bezieht sich auf ein im wesentlichen flächiges Bauelement gemäß dem Oberbegriff des Anspruchs 1.

Ein derartiges Bauelement ist aus des DE-A-100 17 354 bekannt.

Flächige Bauelemente aus Kunststoff kommen in vielfacher Weise in Kraftfahrzeugen zum Einsatz, beispielsweise als Fahrzeugunterbodenverkleidung. Neben einem mechanischen Schutz des Fahrzeugs von der Unterseite, also der Kapselung des Fahrzeugs, soll eine derartige Verkleidung auch die Funktion haben, die Abstrahlung von Schall aus dem Motorraum nach außen weitgehend zu verhindern. Bekannte Unterbodenverkleidungen bestehen beispielsweise aus einem glasfasermattenverstärkten Thermoplast. Als thermoplastisches Material wird Polypropylen eingesetzt.

Aus der DE-A-195 29 440 ist ein Schallabsorber bekannt, der aus einem flachen Bodenteil und einem oberhalb des Bodenteils angeordneten Strukturteil aufgebaut ist. Zwischen dem Bodenteil und dem Strukturteil sind Hohlkammern angeordnet, die zur Schallabsorption dienen.

In der EP-A-0 979 760 werden ein Verfahren zur Herstellung von Verkleidungen und eine Verkleidung für einen Fahrzeughimmel mit integrierten Funktionsteilen beschrieben. Diese werden zwischen zwei Schichten aus einem gitterförmigen Glasfasermaterial eingebracht.

In der EP-A-0 759 352 wird ein Verfahren zur Herstellung einer mehrschichtigen Verkleidung, insbesondere für den Innenraum einer Kraftfahrzeugkarosserie unter Einschluss eines eingebrachten Elements offenbart. Diese Druckschrift offenbart die Merkmale der Oberbegriffe der Ansprüche 12.

Aus der US-A-5 407 610 ist es bekannt, mit Glas- oder Kohlenstofffasern verstärkte Schichten aus einem thermoplastischen Harzmaterial unter dem Einfluss von Wärme in Formen miteinander zu verbinden.

Es ist die Aufgabe der Erfindung, eine technische Lehre zur Schaffung eines Bauelements insbesondere für ein Kraftfahrzeug, bereitzustellen, welches gegenüber den aus dem Stand der Technik bekannten Bauelementen ein niedrigeres Gewicht bei erhöhte Steifigkeit und verbesserten Schallabsorptionseigenschaften aufweist.

Erfindungsgemäß wird diese Aufgabe durch ein Bauelement gemäß dem Anspruch 1 und durch ein Verfahren gemäß dem Anspruch 12 gelöst.

Im Vergleich zu herkömmlichen Bauelementen wird gemäß der Erfindung ein insbesondere für Kraftfahrzeuge geeignetes Bauelement geschaffen, bei dem sich bei niedrigerem Gewicht gleichwohl gleichzeitig eine höhere Bauteilsteifigkeit erzielen lässt. In einem einzigen Form-Fügeprozess lassen sich im Bereich zwischen den beiden Folien Hohlkörper herstellen, beispielsweise eine Anordnung mit einer Vielzahl von Hohlkörpern, die zur Schallabsorption dienen.

Ein weiterer Vorteil des erfindungsgemäßen Bauelements besteht darin, dass sich in einem Bauteil in verschiedenen Bereichen unterschiedliche Materialien und Materialvarianten realisieren lassen.

Vorteilhafte Weiterbildungen der Erfindung ergeben sich aus den Unteransprüchen und aus der Beschreibung.

Mit Vorteil lassen sich zwischen den Folien Einlegeteile einbringen, beispielsweise Verbindungs- oder Fügeelemente zu benachbarten Bauelementen. Beispielhaft kommen etwa Schraubgewinde in Betracht, die es gestatten, das Bauelement mit anderen Teilen des Kraftfahrzeugs zu verbinden. Ebenso sind anstelle der Schraubgewinde auch Anordnungen für Schnappverbindungen und dgl. denkbar.

Dabei wird in einer Ausführungsform der Erfindung vorgesehen, dass das Einlegeteil nur randseitig von beiden Folien umgeben ist. Es versteht sich, dass die Folien auch versetzt auf dem Einlegeteil aufgebracht sein können, d. h., dass das Einlegeteil in einem ersten Teilbereich nur auf seiner Oberseite von einer Folie bedeckt ist und dass das Einlegeteil in einem anderen Teilbereich nur von seiner Unterseite mit eine Folie bedeckt ist.

Zur Verbindung mit anderen Bestandteilen oder zum randseitigen Umschließen eines Einlegeteils, insbesondere eines Hitzeschilds zum Reflektieren von motorraumseitiger Wärme, dient es, wenn mindestens eine der Folien eine Ausstanzung aufweist, in die sich das Einlegeteil innerhalb der Thermoformmaschine einlegen lässt. Auf diese Weise ist ein nachträgliches Aufnieten des Einlegeteils auf das Bauelement nicht erforderlich.

Es lässt sich auch vorsehen, dass das Einlegeteil eine Ausnehmung aufweist, über die die beiden Folien eine Verbindung mit einander haben.

Für bestimmte Anwendungen ist es erforderlich, dass in beide Folien im verbundenen Zustand gemeinsame Ausstanzungen eingebracht werden.

Beispielsweise hat eine Folie eine Ausstanzung in einem Bereich in der Mitte, d. h. nicht in einem Randbereich. In diesem Bereich ragt ein Einlegeteil, beispielsweise ein Wärmeschutzblech, heraus. Das Einlegeteil ist nur an seinen Rändern durch eine diese überdeckende Folie gehalten oder festgeklemmt.

Mit Vorteil werden in das Bauelement eingelegte Einlegeteile nur randseitig von wenigstens einer der Folien umgeben; dadurch sind sie ausreichend mit dem Bauelement fixiert.

Erfindungsgemäß ist vorgesehen, dass die erste Folie aus faserverstärktem, insbesondere durch Polyester-, Polypropylen- oder Glaserfasern verstärkten Polypropylen besteht. Dabei besteht die zweite Folie erfindungsgemäß aus geschäumtem Polyethylenterephthalat (PET). Dadurch hat das gesamte Bauelement eine ausreichende Stabilität, um beim Einsatz des Bauelements als Unterbodenverkleidung des Kraftfahrzeugs Steinschläge abzufangen.

Gemäß einer Ausgestaltung, die nicht vom Anspruch 1 gedeckt ist, besteht die oberhalb der ersten Folie gefügte zweite Folie vorzugsweise aus geschäumtem Polypropylen, das eine gute akustische Dämpfung zeigt. Beide Folien werden zunächst thermisch tief gezogen und anschließend mit einander gefügt.

Bevorzugt ist das eingesetzte Glasfasermaterial langglasfaserhaltig. Besonders geeignet sind Glasfasern, die wenigstens teilweise eine Länge von 1 mm haben, insbesondere von 5 mm oder mehr. Auch die die Glasfasern enthaltende Folie kann zusätzlich geschäumt sein.

Als Einlegeteile kommen neben dem oben bereits aufgeführten Hitzeschild beispielsweise auch ein Versteifungselement, ein Wärmeschutzblech, ein Kühlelement, ein Spritzgussteil, ein Luftführungselement oder ein Befestigungselement, in Betracht. Das Versteifungselement ist insbesondere ein Metallteil. Das Luftführungselement ist beispielsweise eine steuerbare Naca-Düse.

In einem bevorzugten Ausführungsbeispiel weist das Kraftfahrzeug in dem Bauelement eine in dieses integrierte Luftführung auf. Ebenso lassen sich auch Behälter für in dem Fahrzeug benötigte Flüssigkeiten, etwa Wischwasser, Bremsflüssigkeit, Führungen für Kabelstränge, vorgefertigte Schalterboxen, z. B. mit Crashsensoren, oder ein Kühler und dergleichen in das Bauelement integrieren.

Das erfindungsgemäße Bauelement lässt sich auch als Stauraum oder Teil eines Stauraums ausbilden. Ebenso kann das Bauelement ein Luftführungselement zum Ein- und Ausleiten eines Luftstroms enthalten.

Für einen anderen Einsatz, beispielsweise als Außenhaut oder Außenhautkomponente des Kraftfahrzeugs besteht die erste Folie gemäß einer Ausgestaltung, die nicht vom Anspruch 1 gedeckt ist, aus ABS-Kunststoff. Diese Folie dient aufgrund ihrer ausreichenden Stabilität als Trägerschicht für eine zweite Folie, die vorzugsweise als Mehrschichtfolie ausgebildet ist. Sie ist ausgestattet mit einer ersten Schicht aus ABS-PC-Kunststoff, die ihrerseits als Trägerschicht zum Aufbringen auf die erste Folie dient, und mit einer zweiten Schicht aus PMMA, die die äußere Schicht der Außenhaut des Fahrzeugs bildet. Diese Schicht lässt sich einfärben und an die Farbe anderer außen sichtbarer Bestandteile des Kraftfahrzeugs optimal anpassen. Sie ist lichtbeständig und kratzfest.

Eine hohe Stabilität wird zusätzlich dadurch erreicht, dass die Folien durch das Fügeverfahren flächen- oder linienförmig mit einander verbunden sind. Gemäß eines Ausführungsform weist ein Kraftfahrzeug das Bauelement als Fahrzeugunterbodenverkleidung, als Motorraumverkleidung, als Motorhaube, als Kotflügel oder als Türaußenhaut auf.

Gemäß eines Ausführungsform wird ein Bauelement bereitgestellt, das im wesentlichen flächig ausgebildet ist und aus Kunststoff besteht, wobei eine erste und eine zweite thermoplastische Folie, die thermisch durch Tiefziehen mit einander fügbar sind, mit einander verbunden sind. Bei Ausbildung eines Hohlraums oder einer Vielzahl von Hohlräumen ermöglicht das Bauelement, dass Schallwellen durch Interferenzen ausgelöscht werden.

In dem erfindungsgemäßen Bauelement lassen sich Folien verschiedener Materialstärken oder Materialvarianten realisieren. Das Bauelement ist bevorzugt seitlich so ausgebildet, dass es an die Radhausverkleidung angrenzt und auch hier durch entsprechende Befestigungsmittel mit dem Radhaus verbunden ist, so dass eine Radhausanbindung mit dem Radhaus entsteht.

Während des Herstellungsprozesses lassen sich Einlegeteile, beispielsweise Luftführungskanäle, Radhausanbindungen oder eine Naca-Hutze als zusätzliche Komponenten integrieren, ohne dass ein zusätzlicher Fügevorgang notwendig ist.

Unter Folien im Sinne dieser Erfindung sind auch Platten zu verstehen, die beispielsweise eine Wandstärke von 0, 5 bis 2, 5 mm haben, vorzugsweise von 0, 7 mm. Platten und Folien werden durch Extrusion oder über einen Kalander hergestellt.

Obige Aufgabe wird ferner erfindungsgemäß durch ein Verfahren zum Herstellen eines Bauelements gemäß Anspruch 12 gelöst, wobei die Merkmalskombination des Oberbegriffs von Anspruch 12 aus der US 3,539,416 bzw. der DE-A-3103038 bekannt ist. Eine Ausführungsform dieses Verfahrens umfasst unter anderen Verfahrensschritte, gemäß welchem Folien in mindestens einer Heizeinrichtung erwärmt werden und anschließend in eine Thermoformmaschine eingebracht werden, in der mindestens eine der Folien eine Raumform erhält.

Während des Entstehungsprozesses wird zwischen den beiden Folien ein Einlegeteil eingebracht. Anschließend werden die beiden Folien einschließlich des zwischen ihnen liegenden Einlegeteils mit einander gefügt.

Einer der Verfahrensschritte ist bei Bedarf ein Stanzvorgang.

Wenn nur eine der beiden Folien gestanzt werden soll, geschieht dies vor dem Einbringen in die Thermoformmaschine. Wenn in beide Folien eine Öffnung eingebracht werden soll, wird der Stanzvorgang nach dem thermischen Verbinden der Folien ausgeführt.

Um die für das Verbinden der Folien geeignete Temperatur optimal einzustellen, wird mindestens eine der Folien während des Tiefzieh-/ Fügevorgangs zusätzlich erwärmt, wobei die Erwärmung bevorzugt im Randbereich der Folie durchgeführt wird, weil sich hier die Folien am stärksten abkühlen. Hierzu wird zwischen den beiden Werkzeughälften während des Tiefziehens und vor dem Fügevorgang in dem Bereich, in dem die Folien miteinander gefügt werden sollen, eine Heizeinrichtung eingebracht.

Nachstehend wird die Erfindung in einem Ausführungsbeispiel anhand der Zeichnungen näher erläutert. Diese zeigen:
- Fig. 1 a - e: den Herstellungsprozess zum Herstellen eines aus zwei Folien bestehenden Bauelements und
- Fig. 2 a - b: das Bauelement in der Draufsicht und in einer senkrechten Schnittansicht entlang einer Linie II b - II b.

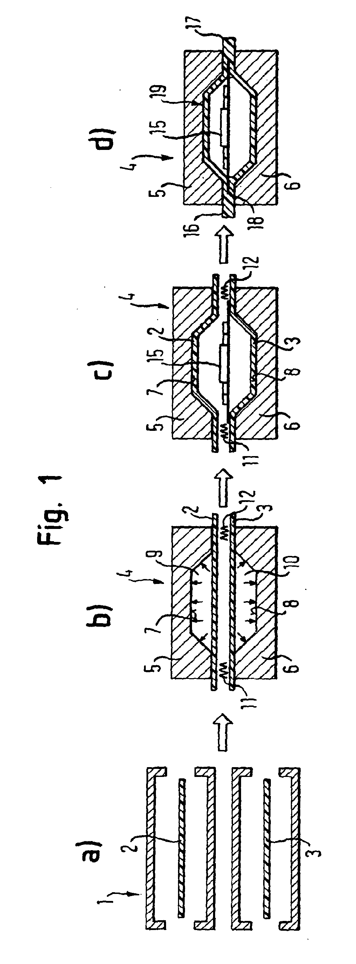

In einer Heizvorrichtung 1 (Fig. 1a) werden eine Folie 2 und eine Folie 3 über einander laufend jeweils durch Wärmestrahlung erwärmt. Die Folien 2, 3 werden in einem vorhergehenden Verfahrensschritt entweder von Rollen abgewickelt. Oder sie werden unmittelbar vor dem Einbringen in die Heizvorrichtung durch Extrudieren hergestellt oder dann durch einen Kalander glatt gewalzt.

Die Folie 2 ist eine geschäumte Folie aus Polypropylen; die Folie 3 ist eine glasfaserhaltige Folie aus Polypropylen.

Aus der Heizvorrichtung 1 werden die Folien 2, 3 in eine Thermoformmaschine 4 (Fig. 1b) in an sich bekannter Weise eingebracht. Diese hat eine obere 5 und eine untere Werkzeughälfte 6, deren innere Konturen 7, 8 jeweils der Form entsprechen, die das aus den Folien 2, 3 entstehende Bauelement haben soll. Über nicht dargestellte Düsen wird Luft aus einem Raum 9 und 10 herausgesaugt, der sich jeweils zwischen der Folie 2 bzw. 3 einerseits und der Kontur 7 bzw. 8 andererseits erstreckt.

Zur Unterstützung des auf den Tiefziehvorgang folgenden Fügevorgangs sind Heizelemente 11 bis 12 vorgesehen, die die Folien auch in den Randbereichen warm halten, damit sie während des Tiefziehens genügend elastisch für den sich anschließenden Fügevorgang bleiben. Bevor in einem nächsten Verfahrensschritt die Werkzeughälften 5, 6 wieder zusammengepresst werden oder noch vorher ein Einlegeteil eingebracht wird, werden die Heizelemente 11, 12 wieder aus dem Bereich zwischen den Werkzeughälften 5, 6 herausgezogen.

In einem nächsten Verfahrensschritt (Fig. 1c) wird ein Einlegeteil 15 zwischen die beiden Folien 2, 3 eingebracht, die nun durch Unterdruckunterstützung an die Konturen 7, 8 angesaugt sind.

In einem weiteren Verfahrensschritt (Fig. 1d) werden die Werkzeughälften 5, 6 zusammengefahren, so dass die Folien 2, 3 in Randzonen 16, 17 miteinander verbunden werden, wobei gleichzeitig auch das Einlegeteil 15 an seinem Rand zwischen den Folien 2, 3 eingelegt ist und damit zwischen ihnen fixiert ist. Auf diese Weise sind die Folien 2, 3 zusammen mit dem Einlegeteil 15 zu einem Bauelement 19 gefügt.

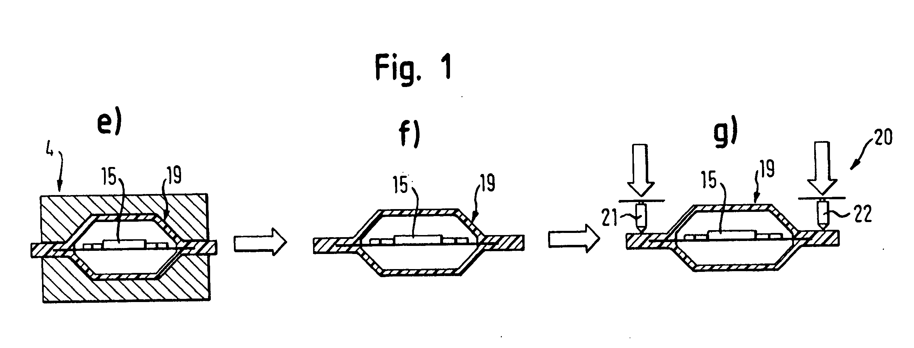

Darauf verbleibt das Bauelement 19 (Fig. 1e) in der Thermoformmaschine 4, bis es sich ausreichend abgekühlt hat.

Anschließend wird es entformt, indem die Werkzeughälften 5, 6 abgezogen werden (Fig. 1f).

In einem Stanzwerkzeug 20 (Fig. 1g) werden mittels kraftbeaufschlagter Stempel 21, 22 Öffnungen in das Bauelement 19 hineingestanzt.

Wenn das Einlegeteil 15 auf einer Seite nicht von der Folie 2 bzw. 3 umschlossen werden soll, wird die entsprechende Folie durch einen vorgelagerten Stanzvorgang, d. h. vor dem Einbringen in die Heizvorrichtung, gestanzt.

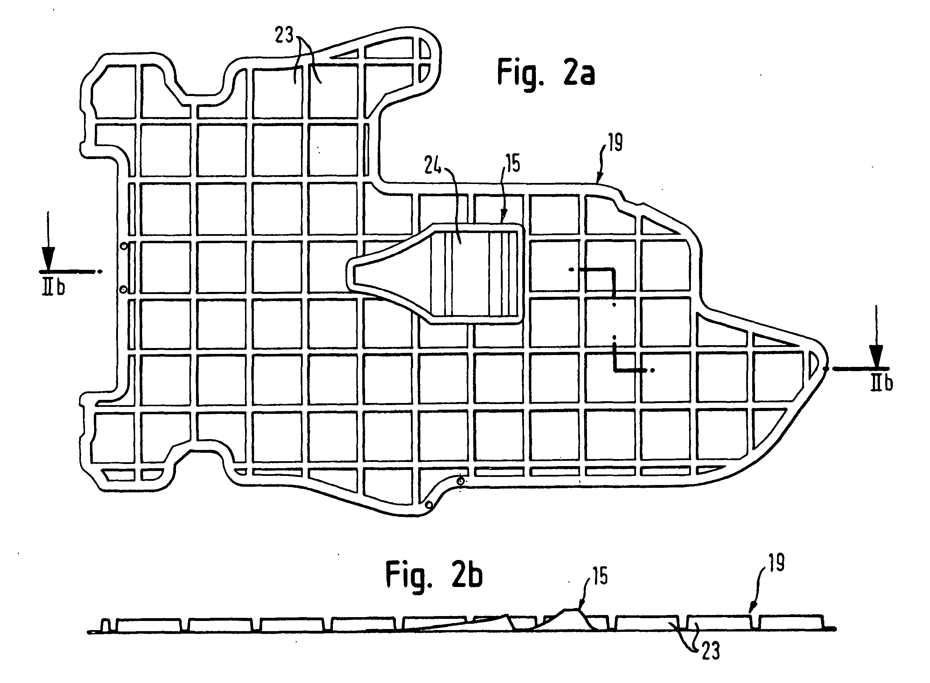

Durch die Verarbeitung der Folien 2, 3 gemäß den oben aufgeführten Schritten entsteht das Bauelement 19 beispielsweise als Fahrzeugunterbodenverkleidung (Fig. 2a -b) mit einer kästchenförmigen Struktur auf der Oberseite, die von der Folie 2 gebildet ist. Zahlreiche Kästchen 23 absorbieren die Motorgeräusche. In das Bauelement 19 ist ein Lufteinlasstrakt 24 integriert.

## Patentansprüche

1. Im Wesentlichen flächiges Bauelement (19) aus Kunststoff, insbesondere für ein Kraftfahrzeug, bestehend aus einer ersten (2) und einer zweiten thermoplastischen Folie (3), die thermisch tief gezogen und mit einander fügbar sind,
**dadurch gekennzeichnet, dass** die erste Folie (2) aus faserverstärktem Polypropylen besteht und dass die zweite Folie (3) aus geschäumtem Polyethylenterephthalat besteht, wobei die erste und die zweite Folie (2, 3) wenigstens einen Hohlraum zwischen sich definieren.

2. Bauelement (19) nach Anspruch 1,
**dadurch gekennzeichnet, dass** die erste Folie (2) aus durch Polyester-, Polypropylen- oder Glasfasern verstärktem Polypropylen besteht.

3. Bauelement (19) nach Anspruch 1 oder 2,
**dadurch gekennzeichnet, dass** zur Faserverstärkung eingesetztes Glasfäsermaterial langglasfaserhaltig ist, wobei insbesondere die Glasfasern wenigstens teilweise eine Länge von 1 mm haben, insbesondere von 5 mm oder mehr.

4. Bauelement (19) nach einem der Ansprüche 1 bis 3,
**dadurch gekennzeichnet, dass** die erste Folie (2) zusätzlich geschäumt ist.

5. Bauelement (19) nach einem der Ansprüche 1 bis 4,
**dadurch gekennzeichnet, dass** mindestens eine der Folien (2, 3) Konturen aufweist und zwischen den Folien (2, 3) mindestens ein konturiertes Einlegeteil (15) eingebracht ist.

6. Bauelement (19) nach Anspruch 5,
**dadurch gekennzeichnet, dass** mindestens eine der Folien (2, 3) eine Ausstanzung aufweist.

7. Bauelement (19) nach Anspruch 5 oder 6,
**dadurch gekennzeichnet, dass** die Folien (2, 3) im verbundenen Zustand gemeinsame Ausstanzungen haben.

8. Bauelement (19) nach Anspruch 7,
**dadurch gekennzeichnet, dass** das Einlegeteil (15) partiell, insbesondere nur randseitig, von beiden Folien (2, 3) umgeben ist.

9. Bauelement (19) nach Anspruch 8,
**dadurch gekennzeichnet, dass** das Einlegeteil eine Ausnehmung aufweist, über die die beiden Folien eine Verbindung mit einander haben.

10. Bauelement (19) nach einem der vorhergehenden Ansprüche,
**dadurch gekennzeichnet, dass** das Einlegeteil (15) ein Versteifungselement, ein Wärmeschutzblech, ein Kühlelement, ein Spritzgussteil, ein Lufteinlass- oder -auslasselement oder ein Befestigungselement ist.

11. Bauelement (19) nach einem der vorhergehenden Ansprüche,
**dadurch gekennzeichnet, dass** das Bauelement (19) als Fahrzeugunterbodenverkleidung, als Motorraumverkleidung, als Motorhaube, als Türaußenhaut, als Kotflügel oder als Stoßfänger eingesetzt ist.

12. Verfahren zum Herstellen eines Bauelements (19), insbesondere für den Einsatz in einem Kraftfahrzeug, umfassend:
- Erwärmen von Folien (2, 3) in einer Heizeinrichtung (1),
- Einbringen der Folien (2, 3) in eine Thermoformmaschine (4), welche zwei Werkzeughälften (5, 6) und eine Heizung (11, 12) umfasst,
- Umformen wenigstens einer der Folien (2, 3) mittels der Thermoformmaschine (4),
- Erwärmen wenigstens einer der Folien (2, 3) in der Thermoformmaschine (4), und
- Zusammenfügen der Folien (2, 3),
wobei der Schritt des Erwärmens wenigstens einer der Folien (2, 3) in der Thermoformmaschine (4) umfasst:
- Einbringen der Heizung (11, 12) zwischen den Werkzeughälften (5, 6) während des Umformens der Folien (2, 3) und vor dem Zusammenfügen der Folien (2, 3),
**dadurch gekennzeichnet, dass** das Verfahren ferner ein Einbringen eines Einlegeteils (15) zwischen den beiden Folien (2, 3), von denen wenigstens eine Folie (2, 3) umgeformt ist, umfasst, wobei das Einlegeteil (15) mit den Folien (2, 3) zusammengefügt wird.

13. Verfahren zum Herstellen eines Bauelements (19) nach Anspruch 12,
**dadurch gekennzeichnet, dass** das Verfahren ferner umfasst:
- Stanzen des Bauelements (19).

14. Verfahren zum Herstellen eines Bauelements (19) nach einem der Ansprüche 12 bis 13,
**dadurch gekennzeichnet, dass** das Verfahren ferner umfasst:
- Stanzen wenigstens einer der Folien (2, 3) vor dem Einbringen derselben in die Thermoformmaschine (4).

## Claims

1. An essentially planar component (19) made of plastic, in particular for a motor vehicle, consisting of a first (2) and a second thermoplastic film (3) which are thermally deep drawn and can be joined together
**characterized in that** the first film (2) consists of fibre-reinforced polypropylene and that the second film (3) consists of foamed polyethylene terephthalate wherein the first and the second film (2, 3) define at least one hollow space between them.

2. Component (19) according to claim 1,
**characterized in that** the first film (2) consists of polypropylene reinforced by polyester, polypropylene or glass fibres.

3. Component (19) according to claim 1 or 2,
**characterized in that** the glass fibre material used for fibre reinforcement contains long glass fibres where in particular at least some of the glass fibres have a length of 1 mm and in particular of 5 mm or more.

4. Component (19) according to one of the claims 1 to 3,
**characterized in that** the first film (2) is additionally foamed.

5. Component (19) according to one of the claims 1 to 4,
**characterized in that** at least one of the films (2, 3) has contours and at least one contoured insert (15) is inserted between the films (2, 3).

6. Component (19) according to claim 5,
**characterized in that** at least one of the films (2, 3) has a punched hole.

7. Component (19) according to claim 5 or 6,
**characterized in that** the films (2, 3) have common punched holes in the joined state.

8. Component (19) according to claim 7,
**characterized in that** the insert (15) is partially surrounded by both films (2, 3) and in particular only on the edge.

9. Component (19) according to claim 8,
**characterized in that** the insert has a cut-out via which the two films have a connection with one another.

10. Component (19) according to one of the previous claims,
**characterized in that** the insert (15) is a stiffening element, a thermal-insulation plate, a cooling element, an injection-moulded part, an air-intake or exhaust element or a fastening element.

11. Component (19) according to one of the previous claims,
**characterized in that** the component (19) is used as a vehicle underbody covering, as an engine cowling, as an engine bonnet, as a door outer skin, as a mudguard or as a bumper.

12. Process for producing a component (19) in particular for use in a motor vehicle comprising:
- heating films (2, 3) in a heating device (1),
- placing the films (2, 3) in a thermoforming machine (4) which comprises two tool halves (5, 6) and a heater (11, 12),
- forming at least one of the films (2, 3) by means of the thermoforming machine (4),
- heating at least one of the films (2, 3) in the thermoforming machine (4), and
- joining the films (2, 3),
wherein the step of heating at least one of the films (2, 3) in the thermoforming machine (4) comprises:
- introducing the heater (11, 12) between the tool halves (5, 6) during the forming of the films (2, 3) and before joining the films (2, 3)
**characterized in that** the process further comprises inserting an insert (15) between the two films (2, 3) of which at least one film (2, 3) is formed, wherein the insert (15) is joined with the films (2, 3).

13. Process for producing a component (19) according to claim 12,
**characterized in that** the process additionally comprises:
- punching the component (19).

14. Process for producing a component (19) according to one of the claims 12 to 13,
**characterized in that** the process additionally comprises:
- punching at least one of the films (2, 3) before placing it in the thermoforming machine (4).

## Revendications

1. Composant (19) sensiblement plat en matière plastique, en particulier pour un véhicule automobile, constitué d'une première (2) et d'une deuxième feuille (3) thermoplastique, qui ont été thermoformées et peuvent être assemblées l'une à l'autre, **caractérisé en ce que** la première feuille (2) est réalisée en polypropylène renforcé par des fibres, et **en ce que** la deuxième feuille (3) est réalisée en polyéthylène téréphtalate expansé, la première et la deuxième feuilles (2, 3) définissant entre elles au moins une cavité.

2. Composant (19) selon la revendication 1, **caractérisé en ce que** la première feuille (2) est réalisée en polypropylène renforcé par des fibres de polyester, des fibres de polypropylène ou des fibres de verre.

3. Composant (19) selon la revendication 1 ou 2, **caractérisé en ce que** le matériau à fibres de verre utilisé pour le renfort par fibres contient de longues fibres de verre, lesdites fibres de verre ayant en particulier au moins en partie une longueur de 1 mm, en particulier de 5 mm ou plus.

4. Composant (19) selon l'une quelconque des revendications 1 à 3, **caractérisé en ce que** la première feuille (2) est, en plus, expansée.

5. Composant (19) selon l'une quelconque des revendications 1 à 4, **caractérisé en ce qu'**au moins une des feuilles (2, 3) possède des profils et au moins un insert (15) profilé est inséré entre les feuilles (2, 3).

6. Composant (19) selon la revendication 5, **caractérisé en ce qu'**au moins une des feuilles (2, 3) comporte un matriçage.

7. Composant (19) selon la revendication 5 ou 6, **caractérisé en ce que** les feuilles (2, 3), à l'état assemblé, comportent des matriçages communs.

8. Composant (19) selon la revendication 7, **caractérisé en ce que** l'insert (15) est entouré partiellement, en particulier seulement sur le bord, par les deux feuilles (2, 3).

9. Composant (19) selon la revendication 8, **caractérisé en ce que** l'insert comporte un évidement, par l'intermédiaire duquel les deux feuilles ont une liaison entre elles.

10. Composant (19) selon l'une quelconque des revendications précédentes, **caractérisé en ce que** l'insert (15) est un élément de raidissement, une tôle de protection contre la chaleur, un élément de refroidissement, une pièce moulée par injection, un élément avec une entrée et une sortie d'air ou un élément de fixation.

11. Composant (19) selon l'une quelconque des revendications précédentes, **caractérisé en ce que** ledit composant (19) est utilisé sous la forme d'un habillage pour le dessous de caisse du véhicule, d'un habillage du compartiment moteur, d'un capot du moteur, d'un revêtement extérieur de porte, d'une aile ou d'un pare-chocs.

12. Procédé de réalisation d'un composant (19), destiné en particulier à être utilisé dans un véhicule automobile, comportant :
- le chauffage des feuilles (2, 3) dans un dispositif de chauffage (1),
- l'introduction des feuilles (2, 3) dans une machine de thermoformage (4), qui comporte deux demi-moules (5, 6) et un élément de chauffage (11, 12),
- le formage d'au moins une des feuilles (2, 3) au moyen de la machine de thermoformage (4), et
- l'assemblage des feuilles (2, 3),
sachant que l'étape du chauffage d'au moins une des feuilles (2, 3) dans la machine de thermoformage (4) comporte :
- l'introduction de l'élément de chauffage (11, 12) entre les demi-moules (5, 6) pendant le formage des feuilles (2, 3) et avant l'assemblage des feuilles (2, 3),
**caractérisé en ce que** ledit procédé comporte en outre l'introduction d'un insert (15) entre les deux feuilles (2, 3), parmi lesquelles au moins une des feuilles (2, 3) est formée, l'insert (15) étant assemblé aux feuilles (2, 3).

13. Procédé de réalisation d'un composant (19) selon la revendication 12, **caractérisé en ce que** ledit procédé comporte en plus :
- le matriçage du composant (19).

14. Procédé de réalisation d'un composant (19) selon l'une quelconque des revendications 12 à 13, **caractérisé en ce que** ledit procédé comporte en plus :
- le matriçage d'au moins une des feuilles (2, 3) avant l'introduction de celle-ci dans la machine de thermoformage (4).
